# EUROPÄISCHE PATENTSCHRIFT

(11) **EP 0 777 598 B1**
(45) Veröffentlichungstag und Bekanntmachung des Hinweises auf die Patenterteilung: **21.10.1998**
(21) Anmeldenummer: 95924172.0
(22) Anmeldetag: 05.07.1995
(51) Int. Cl.: B61H 5/00

(54) **BREMSZANGENEINHEIT FÜR SCHEIBENBREMSEN VON FAHRZEUGEN, INSBESONDERE SCHIENENFAHRZEUGEN**
BRAKE CALIPER UNIT FOR VEHICLE AND ESPECIALLY RAIL VEHICLE DISC BRAKES
ENSEMBLE ETRIER POUR FREINS A DISQUES DE VEHICULES, NOTAMMENT DE VEHICULES SUR RAILS

(30) Priorität: 02.09.1994 DE 4431353
(43) Veröffentlichungstag der Anmeldung: 11.06.1997
(73) Patentinhaber: KNORR-BREMSE Systeme für Schienenfahrzeuge GmbH, 80809 München (DE)
(72) Erfinder: STALTMEIR, Josef, D-80807 München (DE); FUDERER, Erich, D-82110 Germering (DE); SPONFELDNER, Oskar, D-84453 Mühldorf (DE)
(86) Internationale Anmeldenummer: DE9500872
(87) Internationale Veröffentlichungsnummer: WO9607576

(56) Entgegenhaltungen:
- EP-A- 0 499 971
- DE-A- 3 032 992
- GB-A- 2 153 461
- US-A- 1 941 122
- US-A- 3 489 022

## Beschreibung

Die Erfindung betrifft eine Bremszangeneinheit nach dem Gattungsbegriff des Patentanspruches 1.

Bei Bremszangeneinheiten der in Rede stehenden Art (EP-0132 601 B1; EP-0 499 971 B1) ist es üblich, die Enden der mittig durch eine gebenenfalls als Nachstellvorrichtung ausgebildete Zugstange verbundenen Zangenhebel durch einen Bremskrafterzeuger, insbesonder einen zwischen diese Enden eingeordneten Bremszylinder, zur Bremsbetätigung auseinanderzuspreizen; ebenfalls bekannt ist, den Bremszylinder an den mittleren Bereichen der endseitig durch einen Nachsteller gekoppelten Zangenhebel anzulenken. Dabei ist es auch bekannt, in den Bremskrafterzeuger integrierte Nachstellvorrichtungen vorzusehen. Der mittlere Anlenkungsbereich der Zangenhebel muß bei allen diesen Anordnungen radial außerhalb des Bremsscheibendurchmessers liegen und die Zangenhebel weisen daher von diesen Anlenkungsbereichen bis zur Anlenkstelle der Bremsbacken eine beachtliche Länge auf, wodurch zum Erreichen ausreichend großer Gestängeübersetzungen die Zangenhebel insgesamt sehr lang und damit insbesondere unter Beachten der erforderlichen Festigkeit schwer ausgebildet werden müssen. Zum Vermeiden dieses Mangels ist es bekannt, die mittlere Anlenkung der Zangenhebel in Bereiche seitlich der Bremsscheibe zu verlagern und hierdurch den Zangenhebelteil bis zur Bremsbacke zu verkürzen, doch sind hierzu aufwendige, teure Verbindungsgestänge für die mittleren Zangenhebelbereiche mit gegebenenfalls zusätzlichen Gelenkstellen erforderlich, welche sich in der Praxis nicht durchsetzen konnten.

Bei einer gattungsfremden Scheibenbremse (DE-30 32 982 A1) ist es bekannt, die Zangenhebel mittels Federkraft zuzuspannen und mittels eines über einen Exzenter wirkenden Drehfeldmagneten mit Untersetzungsgetriebe zu lösen.

Es ist die Aufgabe der Erfindung, eine Bremszangeneinheit der eingangs angegebenen Art in einfacher Weise derart auszubilden, daß sie bei keinem Raumbedarf und niedrigem Gewicht eine kompakte Bauform und hohe Übersetzungsverhältnisse ermöglicht.

Zur Lösung dieser Aufgabe dienen die Merkmale nach dem Kennzeichnungsteil des Patentanspruches 1.

Nach der Erfindung vorteilhafte Ausgestaltungen und Weiterbildungen für derart ausgebildete Bremszangeneinheiten sind in weiteren Merkmalen der Unteransprüche angegeben.

In der Zeichnung ist ein vorteilhaftes Ausführungsbeispiel für eine nach der Erfindung ausgebildete Bremszangeneinheit dargestellt, und zwar zeigt:
- Figur 1: eine Aufsicht;
- Figur 2: eine Seitenansicht der Bremszangeneinheit, jeweils teilweise aufgeschnitten; und
- Fig.3: eine Einzelheit aus Fig. 2 in vergrößertem Maßstab.

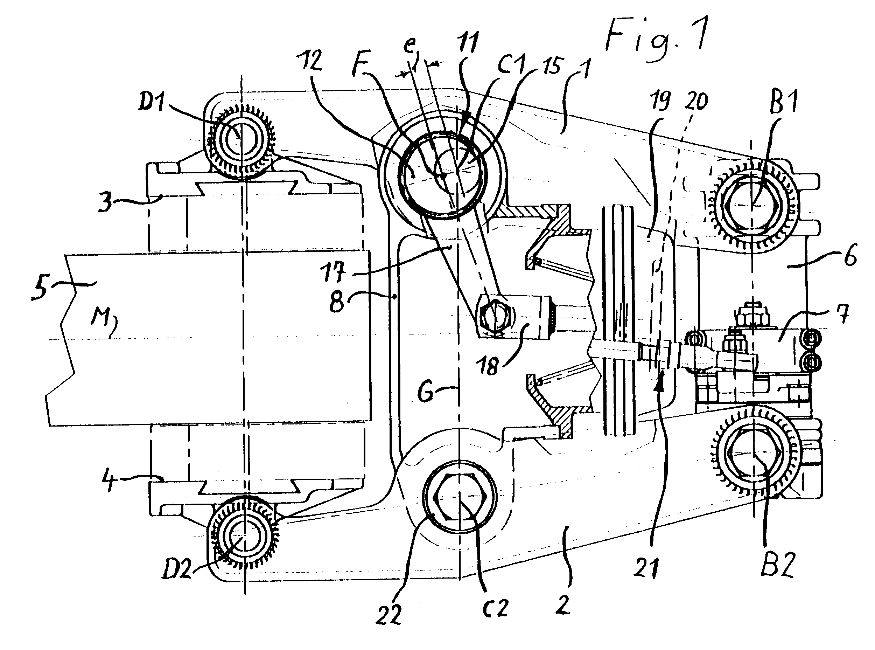

Die Bremszangeneinheit weist gemäß Fig.1 zwei horizontal und zueinander etwa parallel seitlich versetzt verlaufende Zangenhebel 1 und 2 auf, an deren einen Enden um vertikale Achsen D1 und D2 schwenkbar zwei Bremsbacken 3 und 4 angelenkt sind, die an eine zwischen sie eingreifende Bremsscheibe 5 anpreßbar sind. Die anderen Enden der Zangenhebel 1 und 2 sind um die vertikalen Achsen B1 und B2 drehbar an den beiden Enden einer als Druckstangensteller ausgebildeten Nachstellvorrichtung 6 angelenkt, die durch Schwenken einer Betätigungsvorrichtung 7 betätigbar ist; die Nachstellvorrichtung 6 kann wie üblich ein nicht dargestelltes Schraubgetriebe mit vermittels Freiläufen mit der Betätigungsvorrichtung 7 bzw. einem undrehbaren Teil gekoppeltes, drehbares Verschraubungsteil aufweisen, sie kann jedoch auch anderer, bekannter Bauart sein.

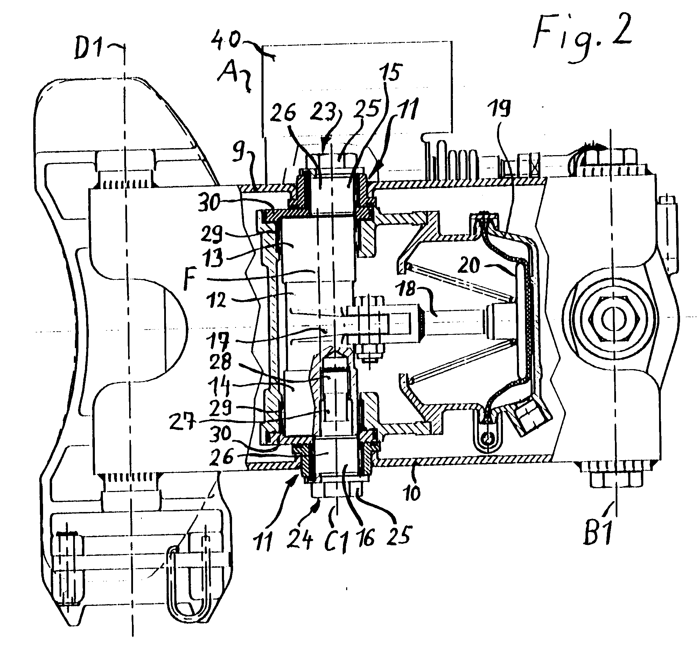

In ihren mittleren Bereichen weisen die beiden Zangenhebel 1 und 2 Anlenkungen zu einem Gehäuse 8 auf, das sich im wesentlichen zwischen ihnen erstreckt. Die Zangenhebel 1 und 2 sind doppelwangig ausgebildet, wie es aus der Fig.2 ersichtlich ist, die eine Seitenansicht von seiten des Zangenhebels 1 zeigt, der teilweise aufgeschnitten mit den beiden Wangen 9 und 10 dargestellt ist. Die Anlenkung des Zangenhebels 1 am Gehäuse 8 ist, wie in Fig.1 und 2 dargestellt, als Exzentergetriebe 11 ausgebildet. Hierzu ist eine vertikale Welle 12 mit einer Achse F vorgesehen, die zwischen den beiden Wangen 9 und 10 und nahe derselben zwei zylindrische Abschnitte 13 und 14 aufweist, mittels welchen sie um die Achse F drehbar am Gehäuse 8 gelagert ist. Von beiden, einander abgewandten Stirnseiten der zylindrischen Abschnittes 13 und 14 kragen zur Achse F exzentrisch zylindrische Zapfen 15 und 16 aus, die Achse C1 dieser Zapfen 15 und 16 weist zur Achse F die Exzentrizität e auf, sie verläuft zur Achse F im wesentlichen schräg in Richtung zur Achse B1 und etwas zur Bremszangeneinheit-Außenseite hin geneigt. Auf den später noch genauer zu beschreibenden Zapfen 15 und 16 sind um die Achse C1 drehbar die beiden Wangen 9 und 10 des Zangenhebels 1 drehbar gelagert. Im mittleren Bereich ihrer Längserstreckung ist die Welle 12 mit einem etwa quer zur Längsrichtung der Zangenhebel 1 und 2 zur Zangenmitte hin auskragenden Kurbelarm 17 drehfest verbunden, dessen Ende an der Kolbenstange 18 eines einen Bremskrafterzeuger darstellenden, zu einer durch die Achsen C1 und C2 gelegten Ebene C bremsscheibenabgewandt angeordneten Bremszylinders 19 mit Kolben 20 angelenkt ist; die Achse des Bremszylinders 19 sowie dessen Kolben 20 verlaufen etwa parallel zur Längsrichtung der Zangenhebel 1 und 2.

Die Betätigungsvorrichtung 7 ist vermittels eines Betätigungsgestänges 21 mit einem mit der Kolbenstange 13 bewegbaren Teil gekoppelt, derart, daß übermäßig große Hübe derselben zu einer Nachstellvorgänge bewirkenden Drehung der Betätigungsvorrichtung 7 führen. Dabei ist es zweckmäßig, wenn wie üblich nur während des Festbremshubes, also ab Überschreiten einer bestimmten Zuspannkraftschwelle, auftretende Überhübe registriert und nachfolgend erst beim Lösehub tatsächliche Nachstellverlängerungen der Nachstellvorrichtung 6 bewirken.

Der andersseitige Zangenhebel 2 ist in seiner Anlenkung vermittels einfacher Drehlager 22 an dessen beiden Wangen um die Achse C2 drehbar am Gehäuse 8 angelenkt.

Im Lösezustand nehmen die Teile der Bremszangeneinheit die aus Fig.1 und 2 ersichtlichen Lagen ein, wobei die Bremsbacken 3 und 4 um einen geringen Lösehub von der Bremsscheibe 5 abgehoben sind. Wird zum Betätigen der Bremstangeneinheit der Bremzylinder 19 druckmittelbeaufschlagt, so wird durch gemäß Fig.1 und 2 Linksverschiebung von Kolben 20 und Kolbenstange 18 über den Kurbelarm 17 die Welle 12 nach Fig.1 im Uhrzeigersinn gedreht. Die Zapfen 15 und 16 bewegen sich dabei auf einer Kreisbahn um die Achse F in Annäherungsrichtung an den Zangenhebel 2 relativ zum Gehäuse 8, wodurch der Zangenhebel 1 bei in seiner Lage verharrendem Gehäuse 8 um die Achse B1 bis zur Anlage der Bremsbacke 3 an der Bremsscheibe 5 gedreht wird. Anschließend dreht sich der Zangenhebel 1 im wesentlichen um die Achse D1, wodurch die Achse B1 gemäß Fig 1 in Richtung zur Achse B2 hin verlagert wird. Bei dieser Verlagerung wird über die Nachstellvorrichtung 6 die Achse B2 mitgenommen, wodurch der Zangenhebel 2 um die ihre Lage beibehaltende Achse C2 bis zur Anlage der Bremsbacke 4 an der Bremsscheibe 5 gedreht wird. Beim nachfolgenden, festen Zuspannen, bei welchem die Bremsbacken 1 und 2 mit großer Kraft an die Bremsscheibe 5 angepreßt werden, werden elastische Verformungen der Teile der Bremszangeneinheit, insbesondere der Zangenhebel 1 und 2 sowie des Gehäuses 8, unter entsprechenden, geringen Drehungen gegebenenfalls beider Zangenhebel 1 und 2 aufgenommen.

Beim nachfolgenden Lösen der Bremse laufen entsprechend umgekehrte Vorgänge ab. Es ist offensichtlich, daß die Exzentrizität e klein und damit das Kraft-Übersetzungsverhältnis der Bremszangeneinheit auch bei ungünstigem Hebelverhältnis, d.h. Hebelarmlängen C-D zu C-B an den Zangenhebeln 1 und 2, sehr groß gestaltet werden kann.

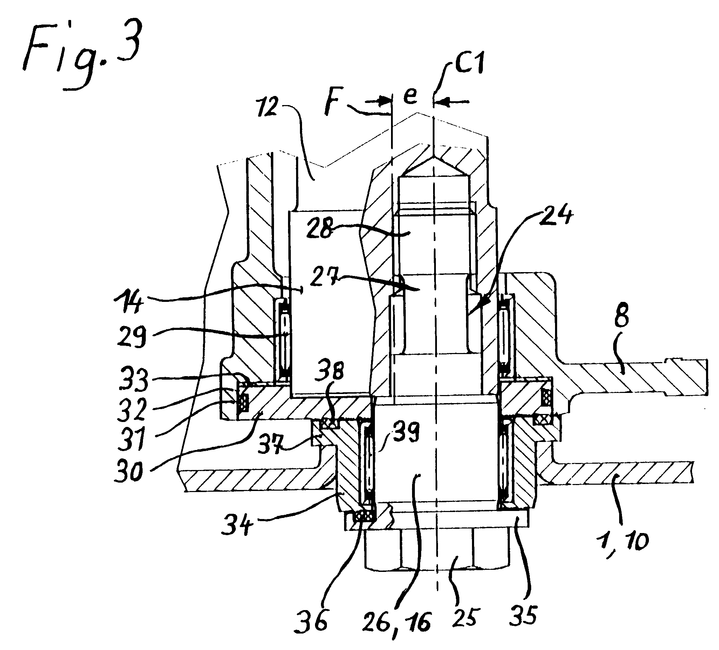

Die Ausbildung des Exzentergetriebes 11 mit den Zapfen 15 und 16 ist an beiden Enden der Welle 12 gleichartig, die Fig.3 zeigt diese Ausbildung für den Bereich des unteren Zapfens 16 besonders deutlich.

Gemäß Fig. 2 und 3 sind die Zapfen 15 und 16 durch zylindrische Abschnitte 26 von zwei Dehnschrauben 23 und 24 gebildet, wobei die zylindrischen Abschnitte 26 sich nahe der Köpfe 25 der Dehnschrauben 23 und 24 befinden; die beiden Dehnschrauben 23 und 24 sind von beiden Seiten her stirnseitig in die vermittels Drehlager 29 am Gehäuse 8 drehgelagerte Welle 12 eingeschraubt, ihr Dehnabschnitt 27 befindet sich zwischen ihrem Schraubabschnitt 28 und dem zylindrischen Abschnitt 26. Die an den zylindrischen Abschnitten 13 und 14 der Welle 12 angeordneten Drehlager 29 können als Wälzlager oder Gleitlager ausgebildet sein. Am Übergang der zylindrischen Abschitte 13 bzw. 14 zum Abschnitt 26 befindet sich jeweils eine die Abschnitte 13 bzw. 14 stirnseitig überdeckende Deckelscheibe 30, die mit ihrem zur Achse F der Welle 12 konzentrischen Außenumfang vemittels eines Dichtringes 31 abgedichtet drehbar an der Wandung einer entsprechend zylindrischen, flachen Ausnehmung 32 gelagert ist. Die mit der Welle 12 drehfest verbundene Deckelscheibe 30 weist einen größeren Durchmesser als das Drehlager 29 der Welle 12 auf, zwischen ihrer wellenseitigen Seitenfläche und der ringförmigen Grundfläche der Ausnehmung 32 befindet sich ein Axaillager 33.

Die Wangen 9 und 10 der Zangenhebel 1 und 2 sind fest mit Lagerhülsen 34 verbunden, die koaxial zu den Achsen C1 und C2 verlaufen und vermittels als Wälz- oder Gleitlager ausgebildeter Drehlager 39 drehbar auf den zylindrischen Abschnitten 26 der Dehnschrauben 23 und 24 gelagert sind. An den Köpfen 25 der Dehnschrauben 23, 24 vorgesehene Ringflansche 35 liegen über Dichtringe 36 abgedichtet drehbar an den äußeren Stirnseiten der Lagerhülsen 34 an, die ihrererseits deckelscheibenseitig mit Ringflanschen 37 enden, die über Dichtringe 38 auf den Deckelscheiben 30 drehbar aufliegen. Die Lagerhülsen 34 sind somit zur Achse C1, C2 verkantungssicher gegen die Deckelscheiben 30 abgestützt, die Bremszangeneinheit kann daher bezüglich der Bremsbacken 3, 4 aufhängependelfrei ausgestaltet werden, wodurch Gewicht, Bauraum sowie Herstellungs- und Montagekosten eingespart werden. Die auf die Bremsbacken 3, 4 während Bremsungen in Umfangsrichtung der Bremsscheibe 5 einwirkenden Kräfte werden über die durch ihre Doppelwangigkeit in Vertikalrichtung besonders steifen Zangenhebel 1 und 2 und deren Lagerhülsen 34 zum einen über die Ringflansche 37 auf die Deckelscheiben 30 und von diesen über die Axiallager 33 und zum anderen über die Drehlager 39, die Dehnschrauben 23, 24 und die Drehlager 29 verkantungssicher auf das Gehäuse 8 übertragen. Selbstverständlich ist es jedoch auch möglich, die Bremsbacken 3, 4 oder die bremsbackennahen Enden der Zangenhebel 1, 2 in üblicher Weise vermittels nicht dargestellter Aufhängependel aufzuhängen, die Zangenhebel können dann vertikal vermindert biegesteif, beispielsweise als einfache Hebel, nicht doppelwangig und ohne Doppelanordnung des Exzentergetriebes zu beiden Enden der Welle 12, ausgebildet und vermindert verkantungssteif am Gehäuse 8 gelagert werden.

Zum Erzielen eines gleichmäßigen Lösehubes der beiden Bremsbacken 3 und 4, d.h. eines gleichen Spielabstandes der Bremsbacken 3, 4 zur Bremsscheibe 5 im Lösezustand der Bremszangeneinheit, kann die um die Achse B1 drehbare Ankoppelsteile des Zangenhebels 1 an die Nachstellvorrichtung 6 schwergängig ausgebildet werden, die Schwergängigkeit kann durch einen vorzugsweise in der Drehlagerung vorgesehenen Reibschluß zwischen Zangenhebel 1 und Nachstellvorrichtung 6 bewirkt werden.

In Abänderung zum vorstehend beschriebenen, bevorzugten Ausführungsbeispiel ist es nach der Erfindung auch möglich, die Anlenkung des Zangenhebels 2 an des Gehäuse 8 anstelle als einfaches Drehlager 22 als Exzentergetriebe entsprechend dem Exzentergetriebe 11 auszubilden und vom Bremszylinder 19 oder einem weiteren Bremszylinder anzutreiben; bei dieser Ausführung sind vergrößerte Hubwege der Bremsbacken 3, 4 möglich. Weiterhin ist es möglich, das eine oder die zwei Exzentergetriebe an den Anlenkungen der Bremshebel zur Nachstellvorrichtung anzuordnen und die Anlenkungen zum Gehäuse als einfache Drehlager auszubilden, wobei die Exzentergetriebe die Zangenhebelenden auseinanderspreizend auszubilden sind. Auch ist es möglich, die Ankoppelstellen von Gehäuse und Nachstellvorrichtung bezüglich der Zangenhebel zu vertauschen, wobei wiederum zu den vorstehend beschriebenen entsprechende, unterschiedliche Ausführungformen mit einem oder mehreren Exzentergetrieben möglich sind; die Nachstellvorrichtung ist dabei als Zugstangensteller auszuführen und das oder die Exzentergetriebe die Zangenhebelenden auseinanderspreizend auszubilden.

Bei horizontal nebeneinander verlaufenden Zangenhebeln 1, 2 kann es zweckmäßig sein, wie in Fig.2 eingezeichnet das Gehäuse 8 an seiner Oberseite mit einem Lagerauge 40 relativ großer Länge zu versehen, dessen Achse A horizontal etwa in der in Fig.1 angegebenen, radialen Längsmittelebene M rechtwinklig zur nicht ersichtlichen Achse der Bremsscheibe 5 verläuft. Mttels dieses Lagerauges 40 ist die Bremszangeneinheit um die Achse A drehbar an einem fahrzeugfesten, nicht dargestellten Teil, insbesondere dem Fahrzeug- oder Drehgestellrahmen, anzulenken. Die Bremszangeneinheit vermag dann besonders große Drehbewegungen der Bremsscheibe 5 um eine in Fahrzeuglängsrichtung verlaufende Drehachse, wie sie bei auf der einerseits an einen Antrieb und andererseits an einen Radsatz angekoppelten Hohlwelle eines Hohwellenantriebes des Fahrzeuges sitzender Bremsscheibe 5 auftreten können, zwangfrei aufzunehmem. Bei dieser um die Achse A drehbaren Aufhängung der Bremszangeneinheit ist es zweckmäßig, diese durch entsprechend seitlich zu einem der Zangenhebel hin versetzte Anordnung einzelner oder mehrere ihrer Teile, insbesondere des Bremskrafterzeugers, der Nachstellvorrichtung und/oder des Betätigungsgestänges 21, gegebenenfalls mitsamt der Betätigungsvorrichtung 7, mit einem indifferenten Drehgleichgewicht um die Achse A auszustatten. Aus Fig.1 ist ersichlich, daß zum Ausgleich des Gewichtes des Exzentergetriebes 11 die Betätigungsvorrichtung 7 mitsamt dem Betätigungsgestänge 21 aus der Längsmittelebene M seitlich zum dem Exzentergetriebe 11 gegenüberliegenden Zangenhebel 2 hin versetzt angeordnet sind.

### Kurzfassung:

Die Bremszangeneinheit weist zwei Zangenhebel (1;2) auf, deren eine Enden an Bremsbacken (3;4) und andere Enden an einem sich zwischen ihnen erstreckenden Druckstangensteller (6) angelenkt sind. Die mittleren Bereiche der Zangenhebel (1;2) sind an ein Gehäuse (8) angekoppelt, wobei die Ankopelstelle des einen Zangenhebels (2) als einfaches Drehlager (22) ausgebildet ist. Die Ankoppelstelle des anderen Zangenhebels (1) ist als Exzentergetriebe (11) augeführt, das von einem im Gehäuse (8) gehalterten Bremszylinder (19) über einen Kurbelarm (17) in Annäherungsrichtung der beiden Zangenhebel (1;2) betätigbar ist.

Das Exzentergetriebe (11) weist eine im Gehäuse (8) um eine Achse (F) drehbare Welle (12) auf, welche mit einer Exzentrizität (e), die der Bremsscheibe (5) abgewandt schräg nach hinten-außen gerichtet ist, einen Zapfen (15) mit der Achse (C1) trägt, an welchem der Zangenhebel (1) gelagert ist.

Das Exzentergetriebe (11) ermöglicht bei relativ kurzen Zangenhebeln (1;2) ein hohes Kraftübersetzungsverhältnis.

| Aufstellung der Bezugszeichen. | | | |
|---|---|---|---|
| A | Achse | B1 | Achse |
| B2 | Achse | C1 | Achse |
| C2 | Achse | D1 | Achse |
| D2 | Achse | G | Ebene |
| M | Längsmittelebene | e | Exzentrizität |
| 1 | Zangenhebel | 2 | Zangenhebel |
| 3 | Bremsbacke | 4 | Bremsbacke |
| 5 | Bremsscheibe | 6 | Nachstellvorrichtung |
| 7 | Betätigungsvorrichtung | 8 | Gehäuse |
| 9 | Wange | 10 | Wange |
| 11 | Exzentergetriebe | 12 | Welle |
| 13 | Abschnitt | 14 | Abschnitt |
| 15 | Zapfen | 16 | Zapfen |
| 17 | Kurbelarm | 18 | Kolbenstange |
| 19 | Bremszylinder | 20 | Kolben |
| 21 | Betätigungsgestänge | 22 | Drehlager |
| 23 | Dehnschraube | 24 | Dehnschraube |
| 25 | Kopf | 26 | Abschnitt |
| 27 | Dehnabschnitt | 28 | Schraubabschnitt |
| 29 | Drehlager | 30 | Deckelscheibe |
| 31 | Dichtring | 32 | Ausnehmung |
| 33 | Axiallager | 34 | Lagerhülse |
| 35 | Ringflansch | 36 | Dichtring |
| 37 | Ringflansch | 38 | Dichtring |
| 39 | Drehlager | 40 | Lagerauge |

## Patentansprüche

1. Bremszangeneinheit für Scheibenbremsen von Fahrzeugen, insbesondere Schienenfahrzeugen, mit zwei im wesentlichen annähernd parallel nebeneinander verlaufenden Zangenhebeln (1;2), an deren einen Enden an eine Bremsscheibe (5) anpreßbare Bremsbacken (3;4) angelenkt sind und die an ihren anderen, entgegengesetzten Enden und in ihren Mittelbereichen miteinander bzw. mit einem Gehäuse (8) schwenkbar gekoppelt sind, wobei in die durch jeweils korrespondierende Paare von Koppelstellen an den Zangenhebeln gebildeten Koppelungen ein Bremskrafterzeuger und eine Nachstellvorrichtung (6) eingeordnet sind, **gekennzeichnet durch** folgende Merkmale:
a) der Bremskrafterzeuger ist im Mittelbereich der Zangenhebel (1;2) angekoppelt und besteht als wenigstens ein von einem Bremszylinder in Zuspannrichtung betätigbares Exzentergetriebe (11) mit Anlenkung an einem der Zangenhebel (1;2);
b) die Anlenkung ist mit dem Gehäuse (8) gekoppelt; und
c) die Zangenhebel (1;2) sind an ihren anderen, entgegengesetzten Enden an der Nachstellvorrichtung (6) schwenkbar angelenkt.

2. Bremszangeneinheit nach Anspruch 1, **dadurch gekennzeichnet,** daß der Bremszylinder (19) zwischen den beiden Zangenhebeln (1;2) mit etwa paralleler Achsrichtung zu diesen am Gehäuse (8) gehaltert und mit dem Exzentergetriebe (11) über einen etwa quer zur Längsrichtung der Zangenhebel (1;2) verlaufenden Kurbelarm (17) gekoppelt ist.

3. Bremszangeneinheit nach einem der vorangehenden Ansprüche, **dadurch gekennzeichnet,** daß das Exzentergetriebe (11) eine drehbar am Gehäuse (8) gelagerte, vom Bremszylinder mittels des Kurbelarms (17) antreibbare Welle (12) aufweist, an welcher mittels eines exzentrischen Zapfens (15;16) drehbar der zugeordnete Zangenhebel (1) gelagert ist.

4. Bremszangeneinheit nach Anspruch 1 oder 2, **dadurch gekennzeichnet,** daß die Nachstellvorrichtung (6) mittels eines Betätigungsgestänges (21) betätigbar ist, welches sich von der Nachstellvorrichtung zu einem vom Bremszylinder bewegbaren Teil erstreckt.

5. Bremszangeneinheit nach einem der Ansprüche 1 oder 2, **dadurch gekennzeichnet,** daß bei doppelwangiger Ausbildung der Zangenhebel (1;2) die Welle (12) an jedem ihrer Enden einen zu ihr exzentrischen Zapfen (15;16) trägt, auf deren jedem eine der beiden Wangen (9;10) des zugeordneten Zangenhebels (1) drehbar gelagert ist, und daß die Welle (12) benachbart zu jedem der Zapfen (15;16) drehbar am Gehäuse (8) gelagert ist und in ihrem mittleren Bereich drehfest mit dem Kurbelarm (17) verbunden ist.

6. Bremszangeneinheit nach Anspruch 5, **dadurch gekennzeichnet,** daß der Zapfen (15;16) von einer stirnseitig in die Welle (12) eingeschraubten Schraube gehaltert, vorzugsweise von einem zylindrischen Abschnitt (26) der Schraube gebildet wird.

7. Bremszangeneinheit nach einem der vorangehenden Ansprüche, **dadurch gekennzeichnet,** daß bei horizontal nebeneinander befindlichen Zangenhebeln (1;2) das Gehäuse (8) an seiner Oberseite eine Drehlagerung mit horizontaler, etwa in einer radialen Mittelebene (M) der Bremsscheibe (5) rechtwinklig deren Achse verlaufender Achse (A) aufweist, und daß die Drehlagerung an einem fahrzeugfesten Teil, insbesondere am Fahrzeug- oder Drehgestellrahmen, angelenkt ist.

8. Bremszangeneinheit nach Anspruch 7, **dadurch gekennzeichnet,** daß die Bremszangeneinheit zum Erzielen eines indifferenten Drehgleichgewichtes um die Achse (A) eine geeignete Massen- und Bauteilanordnung, insbesondere durch entsprechend seitlich zu einem der Zangenhebel (1;2) hin versetzte Anordnung von Bremskrafterzeuger, Nachstellvorrichtung (6) und/oder deren Betätigungsvorrichtung (7) und/oder Betätigungsgestänge (21), aufweist.

9. Bremszangeneinheit nach einem der vorangehenden Ansprüche, **dadurch gekennzeichnet,** daß zum Erzielen des indifferenten Drehgleichgewichtes das Betätigungsgestänge (21) der Nachstellvorrichtung (6) seitlich zu dem dem Exzentergetriebe (11) gegenüberliegenden Zangenhebel (2) hin versetzt angeordnet ist.

10. Bremszangeneinheit nach einem der vorangehenden Ansprüche, **dadurch gekennzeichnet,** daß zum Erzielen eines symmetrischen Lüftspiels die Lagerstelle zur Nachstellvorrichtung (6) des vermittels des Exzentergetriebes (11) am Gehäuse (8) gelagerten Zangenhebels (1) einen Schwergang, insbesondere einen direkten oder indirekten Reibschluß zwischen dem Zangenhebel (1) und der Nachstellvorrichtung (6), aufweist.

## Claims

1. Brake caliper unit for disc brakes of motor vehicles, in particular rail vehicles, having two caliper levers (1; 2) which extend substantially approximately in parallel with each other, on the one ends of which caliper levers are articulated brake shoes (3; 4) which can be pressed against a brake disc (5), and which caliper levers are, at their other, opposed ends and in their centre regions, pivotably coupled to each other and to a housing (8), with there being arranged in the couplings, which are formed by respectively corresponding pairs of coupling points on the caliper levers, a braking force generator and an adjusting device (6), characterised by the following features:
a) the braking force generator is coupled in the centre region of the caliper levers (1; 2) and comprises at least one eccentric gearing (11) which can be actuated in the clamping direction by a brake cylinder and has an articulation on one of the caliper levers (1; 2);
b) the articulation is coupled to the housing (8); and
c) at their other, opposed ends, the caliper levers (1; 2) are pivotably articulated on the adjusting device (6).

2. Brake caliper unit according to claim 1, characterised in that the brake cylinder (19) is held on the housing (8) between the two caliper levers (1; 2) with an axis direction that is substantially parallel to said caliper levers, and is coupled to the eccentric gearing (11) by way of a crank arm (17), which extends substantially transversely with respect to the longitudinal direction of the caliper levers (1; 2).

3. Brake caliper unit according to one of the preceding claims, characterised in that the eccentric gearing (11) has a shaft (12), which is rotatably mounted on the housing (8) and can be driven by the brake cylinder by means of the crank arm (17) and on which the associated caliper lever (1) is mounted in a manner such that it can be rotated by means of an eccentric pin (15; 16).

4. Brake caliper unit according to claim 1 or 2, characterised in that the adjusting device (6) can be actuated by means of an actuating linkage (21), which extends from the adjusting device to a part which can be moved by the brake cylinder.

5. Brake caliper unit according to one of claims 1 or 2, characterised in that in the case of a double-cheeked construction of the caliper levers (1; 2), the shaft (12) carries at each of its ends a pin (15; 16) which is eccentric to said shaft, on each of which pins one of the two cheeks (9; 10) of the associated caliper lever (1) is rotatably mounted, and in that the shaft (12) is mounted rotatably on the housing next to each of the pins (15; 16) and its centre region is connected to the crank arm (17) in a rotationally secure manner.

6. Brake caliper unit according to claim 5, characterised in that the pin (15; 16) is held by a screw which is screwed into the shaft (12) on the end face, preferably formed by a cylindrical section (26) of the screw.

7. Brake caliper unit according to one of the preceding claims, characterised in that in the case of caliper levers (1; 2) which are located horizontally next to each other, the housing (8) has on its upper side a pivot bearing with a horizontal axis (A), which extends substantially in a radial centre plane (M) of the brake disc (5) at right angles to the axis thereof, and in that the pivot bearing is articulated on a vehicle-fixed portion, in particular on the vehicle chassis or bogie chassis.

8. Brake caliper unit according to claim 7, characterised in that in order to achieve a balanced turning equilibrium about the axis (A), the brake caliper unit has a suitable arrangement of masses and components, in particular as a result of the braking force generator, the adjusting device (6), and/or the actuating device (7) and/or actuating linkage (21) thereof, being arranged so as to be laterally offset towards one of the caliper levers (1; 2).

9. Brake caliper unit according to one of the preceding claims, characterised in that in order to achieve the balanced turning equilibrium, the actuating linkage (21) of the adjusting device (6) is arranged so as to be laterally offset towards the caliper lever (2) which is opposite the eccentric gearing (11).

10. Brake caliper unit according to one the preceding claims, characterised in that in order to achieve a symmetrical air play, the bearing has a sluggish operation with respect to the adjusting device (6) of the caliper lever (1) which is mounted on the housing (8) by means of the eccentric gearing (11), in particular a direct or indirect frictional engagement between the caliper lever (1) and the adjusting device(6).

## Revendications

1. Ensemble formant étrier de frein pour des freins à disque de véhicules, en particulier de véhicules sur rails, comportant deux leviers d'étrier (1; 2) s'étendant l'un à côté de l'autre, essentiellement dans des positions approximativement parallèles, auxquels sont articulées, à l'une de leurs extrémités, des mâchoires de frein (3; 4), susceptibles d'être pressées contre un disque de frein (5), et qui sont accouplés à pivotement l'un à l'autre, à leurs autres extrémités opposées, et à un bâti (8), dans leurs parties médianes, un générateur de force de freinage et un dispositif de rattrapage (6) étant alors intercalés dans les structures d'accouplement définies par des paires correspondantes respectives de points d'accouplement sur les leviers d'étrier, caractérisé par les caractéristiques suivantes:
a) le générateur de force de freinage est accouplé dans la partie médiane des leviers d'étrier (1; 2) et est conçu sous forme d'au moins un mécanisme à excentrique (11) qui peut être actionné, dans le sens du serrage, par un cylindre de frein et qui comporte une articulation à l'un des leviers d'étrier (1; 2);
b) l'articulation est accouplée au bâti (8); et
c) les leviers d'étrier (1; 2) sont, à leurs autres extrémités opposées, articulés à pivotement au dispositif de rattrapage (6).

2. Ensemble formant étrier de frein selon la revendication 1, caractérisé en ce que le cylindre de frein (19) est supporté sur le bâti (8), entre les deux leviers d'étrier (1; 2), avec une direction d'axe sensiblement parallèle à ces derniers, et est accouplé au mécanisme à excentrique (11) par l'intermédiaire d'un bras de manivelle (17) qui s'étend à peu près transversalement à la direction longitudinale des leviers d'étrier (1; 2).

3. Ensemble formant étrier de frein selon l'une des revendications précédentes, caractérisé en ce que le mécanisme à excentrique (11) comporte un arbre (12) monté à rotation sur le bâti (8) et apte à être entraîné par le cylindre de frein au moyen du bras de manivelle (17), arbre sur lequel le levier d'étrier associé (1) est monté, libre en rotation, au moyen d'un tourillon excentré (15; 16).

4. Ensemble formant étrier de frein selon la revendication 1 ou 2, caractérisé en ce que le dispositif de rattrapage (6) peut être actionné au moyen d'une tringlerie de commande (21), qui s'étend du dispositif de rattrapage jusqu'à une pièce déplaçable par le cylindre de frein.

5. Ensemble formant étrier de frein selon l'une des revendications 1 ou 2, caractérisé en ce que, dans le cas d'une configuration en double joue des leviers d'étrier (1; 2), l'arbre (12) porte, à chacune de ses extrémités, un tourillon (15; 16) excentré par rapport à lui, sur lequel l'une des deux joues (9; 10) du levier d'étrier respectivement associé (1) est montée libre en rotation, et en ce que l'arbre (12) est monté à rotation sur le bâti (8) au voisinage de chacun des tourillons (15; 16) et est, dans sa partie médiane, relié au bras de manivelle (17), en en étant solidaire en rotation.

6. Ensemble formant étrier de frein selon la revendication 5, caractérisé en ce que le tourillon (15; 16) est supporté par une vis insérée par vissage dans la face d'extrémité de l'arbre (12) et, de préférence, est formé par un tronçon cylindrique (26) de la vis.

7. Ensemble formant étrier de frein selon l'une des revendications précédentes, caractérisé en ce que, dans le cas où les leviers d'étrier (1; 2) se trouvent l'un à côté de l'autre en position horizontale, le bâti (8) comporte, sur sa face supérieure, un palier de rotation ayant un axe horizontal (A) qui s'étend sensiblement dans un plan médian radial (M) du disque de frein (5), perpendiculairement à l'axe de ce dernier, et en ce que le palier de rotation est articulé à un élément solidaire du véhicule, en particulier au châssis du véhicule ou au châssis d'un bogie.

8. Ensemble formant étrier de frein selon la revendication 7, caractérisé en ce que l'ensemble formant étrier de frein, en vue de l'obtention d'un équilibre indifférent en rotation autour de l'axe (A), présente une disposition adaptée des masses et des pièces constitutives, en particulier par la disposition décalée latéralement dans une mesure appropriée, vers l'un des leviers d'étrier (1; 2), du générateur de force de freinage, du dispositif de rattrapage (6) et/ou de leur dispositif de commande (7) et/ou de la tringlerie de commande (21).

9. Ensemble formant étrier de frein selon l'une des revendications précédentes, caractérisé en ce que, pour l'obtention de l'équilibre indifférent en rotation, la tringlerie de commande (21) du dispositif de rattrapage (6) est disposée avec un décalage latéral vers le levier d'étrier (2) placé à l'opposé du mécanisme à excentrique (11).

10. Ensemble formant étrier de frein selon l'une des revendications précédentes, caractérisé en ce que, pour l'obtention d'un jeu symétrique de déblocage du frein, le palier de montage en rotation, par rapport au dispositif de rattrapage (6), du levier d'étrier (1), monté au moyen du mécanisme à excentrique (11) sur le bâti (8), présente un point dur, en particulier par frottement direct ou indirect entre le levier d'étrier (1) et le dispositif de rattrapage (6).
